# EUROPÄISCHE PATENTSCHRIFT

(11) **EP 1 869 096 B1**
(45) Veröffentlichungstag und Bekanntmachung des Hinweises auf die Patenterteilung: **26.08.2009**
(21) Anmeldenummer: 06724093.7
(22) Anmeldetag: 06.04.2006
(51) Int. Cl.: C08G 2/00, C08G 2/18, C08G 2/38

(54) **VERFAHREN ZUR HERSTELLUNG VON POLYOXYMETHYLEN-HOMO- UND -COPOLYMEREN UND DAFÜR GEEIGNETE VORRICHTUNG**
METHOD FOR PRODUCING HOMOPOLYMERS AND COPOLYMERS OF POLYOXYMETHYLENE AND CORRESPONDING DEVICE
PROCEDE POUR PRODUIRE DES HOMOPOLYMERES ET DES COPOLYMERES DE POLYOXYMETHYLENE ET DISPOSITIF ASSOCIE

(30) Priorität: 08.04.2005 DE 102005016129
(43) Veröffentlichungstag der Anmeldung: 26.12.2007
(73) Patentinhaber: Ticona GmbH, 65451 Kelsterbach (DE)
(72) Erfinder: HOFFMOCKEL, Michael, 65527 Niedernhausen (DE); KRAMER, Matthias, 65929 Frankfurt (DE); MUECK, Karl-Friedrich, 65207 Wiesbaden (DE); ROESCHERT, Horst, 55437 Ober-Hilbersheim (DE)
(86) Internationale Anmeldenummer: PCT/EP2006/003148
(87) Internationale Veröffentlichungsnummer: WO 2006/105970

(56) Entgegenhaltungen:
- EP-A- 0 638 599
- EP-A- 0 699 695
- EP-A- 1 259 557
- EP-A- 1 418 190

## Beschreibung

Die vorliegende Erfindung betrifft ein verbessertes Verfahren zur Herstellung von Polyoxymethylen-Homo- und -Copolymeren in homogener Phase sowie eine dafür besonders geeignete Vorrichtung.

Die Herstellung von Polyoxymethylenen ist an sich bekannt. Die Polymerisation kann sowohl in Masse als auch in Lösung sowie drucklos oder unter Druck erfolgen.

Es sind zahlreiche Verfahren zur Herstellung von Oxymethylen-Homo- oder -copolymeren bekannt. Die kontinuierliche Polymerisation der Monomeren im technischen Maßstab ist in vielen Veröffentlichungen beschrieben, beispiels-weise in US-A-3,027,352, US-A-3,803,094, DE-A-1,161,421, DE-A-1,495,228, DE-A-1,720,358 und DE-A-3,018,898. Als Polymerisationsreaktoren werden unter anderem Kneter, Extruder, Walzen oder Bänder beschrieben.

Gemeinsames Merkmal dieser Verfahren ist ein während der Polymerisation stattfindender Phasenübergang von gasförmigen bzw. flüssigen Monomeren zum teilkristallinen festen Polymeren. Dies führt zu Problemen beim Abführen der frei werdenden Polymerisations- und Kristallisationswärme und verursacht demzufolge Umsatzeinbußen.

Es sind auch bereits Verfahren beschrieben worden, bei denen die Herstellung des Polymeren in homogener Phase erfolgt. In der EP-A-080,656 wird ein Verfahren zur kontinuierlichen Massepolymerisation von Trioxan in homogener, flüssiger Phase bei Temperaturen oberhalb von 135°C beschrieben. Als Vorteile dieses Verfahrens werden unter anderem einfache Handhabung des Prozesses, geringerer Energieaufwand und Polymerisate mit gleichbleibender Produktqualität genannt.

In der EP-A-638,599 und der DE-A-44 23 617 werden Verbesserungen des Verfahrens der Polymerisation in homogener Phase durch einfachere Prozessführung beschrieben. Dabei erfolgt ein einfacher Übergang vom Polymerisationsreaktor in einen Desaktivierungsreaktor ohne Trennelement. Es besteht ein fließender Übergang zwischen Polymerisations- und Desaktivator-zone, der lediglich durch die Zugabe des Desaktivators festgelegt ist. Als weitere Verbesserung wird der Abbau der instabilen Kettenenden in Gegenwart von Restmonomeren erreicht. Dabei gelingt es, den Anteil der instabilen Kettenenden bis auf etwa 0,1 Masseprozent zu senken. Bei der Aufarbeitung des Produktes mittels eines Entgasungsaggregat verbleiben jedoch in den nach diesem Polymerisationsverfahren hergestellten Produkten Anteile von Verunreinigungen.

Eine Verbesserung des vorstehend beschriebenen Polymerisationsverfahrens wird in der EP-A-699,695 vorgestellt. Dabei werden die instabilen Kettenenden in Anwesenheit von Restmonomeren bis auf 0,01 bis 1 % abgebaut, das Produkt sodann wird am Reaktorausgang durch Entspannung in einer Granuliervorrichtung von einem Großteil der Restmonomeren befreit, die verbliebenen Restmonomeren sowie die im Produkt gelösten Verunreinigungen werden durch Extraktion mit Lösemitteln entfernt und das Produkt wird nach Trocknung und Stabilisierung granuliert.

In der WO-A-01/58,974 wird eine andere Variante der Polymerisation in homogener Phase beschrieben. Danach wird die Produktschmelze gegebenen-falls deaktiviert und unter erhöhtem Druck und in Anwesenheit einer Flüssigkeit ausgetragen, gekühlt und granuliert. Durch dieses Verfahren wird die Neigung zur Schaumbildung bei der Entgasung reduziert und die Entstehung von Feinanteil bei der Granulierung wird minimiert.

Es besteht ein ständiger Bedarf nach günstigeren Polymerisations- und Verarbeitungsverfahren, um dem allgegenwärtigen Kostendruck begegnen zu können.

Aufgabe der vorliegenden Erfindung ist das Bereitstellen eines einfachen Verfahrens zur Herstellung von Oxymethylen-Homo- oder -Copolymeren in homogener Phase, das energetisch günstig ist und das eine effiziente Verringerung des Restmonomergehalts gestattet.

Eine weitere Aufgabe der vorliegenden Erfindung ist die Bereitstellung eines Verfahrens zur Herstellung von Oxymethylen-Homo- oder -Copolymeren in homogener Phase, das mit einfachen Mitteln und energetisch günstig die Erzeugung von stabilisierten Polyoxymethylen-Mischungen gestattet.

Es wurde jetzt in überraschender Weise gefunden, dass man durch eine Kombination verschiedener Verfahrensschritte in vorgegebener Abfolge das Verfahren energetisch besonders günstig betreiben kann. Dabei wird einerseits der Gehalt an Restmonomeren unter Ausnutzung der Temperatur der Polymerschmelze verringert und andererseits werden verbliebene Verunreinigungen in einer nachgeschalteten Extraktionsstufe effizient beseitigt.

Ferner wurde gefunden, dass in einer Vorrichtung sowohl der Gehalt an Restmonomeren verringert als auch eine Stabilisatormischung in das Polymere eingearbeitet werden kann.

Die vorliegende Erfindung betrifft ein Verfahren zur Herstellung von Polyoxymethylen-Homo- und -Copolymeren umfassend die Maßnahmen:
i) Polymerisation mindestens eines -CH₂-O- Einheiten bildenden Monomers gegebenenfalls mit einem oder mehreren Comonomer(en) und mindestens eines Initiators in homogener Phase in einer Polymerisationszone in an sich bekannter Weise,
ii) Abbau der instabilen Kettenenden und/oder Verschluß der Endgruppen des in Schritt i) hergestellten Polymerisats bei Temperaturen oberhalb von dessen Schmelztemperatur und Desaktivierung des Initiators durch Zugabe von Deaktivatoren in einer sich an die Polymerisationszone anschließenden Deaktivierungszone in an sich bekannter Weise,
iii) Überführung der Polymerschmelze in eine Entspannungszone,
iv) Entfernen der Restmonomeren aus der Polymerschmelze durch Anlegen eines verminderten Druckes an die Entspannungszone,
v) Granulieren des Polymerisats,
vi) Extrahieren von verbliebenen Restmonomeren und/oder von Oligomeren und anderen Verunreinigungen aus dem Polymerisat, und
vii) gegebenenfalls Trocknen des Polymerisats.

Bei Schritt i) handelt es sich um eine an sich bekannte Polymerisation in homogener Phase.

Dazu wird ein -CH₂-O- Einheiten bildendes Monomer oder ein Gemisch verschiedener Monomerer mit üblichen Initiatoren und gegebenenfalls mit Reglern bei einer Temperatur oberhalb der Schmelzetemperatur des entstehenden Homo-oder Copolymeren bei Drucken bis zu 2000 bar (co)polymerisiert.

Zur Herstellung der Polyoxymethylen-Homo- oder -Copolymeren wird ein -CH₂-O-Einheiten bildendes Monomer oder ein Gemisch verschiedener Monomerer in der oben beschriebenen Weise umgesetzt.

Bei den Polyoxymethylen-Homo- oder -Copolymeren handelt es sich im Allgemeinen um unverzweigte lineare Polymere, die in der Regel mindestens 50 mol %, vorzugsweise mindestens 80 mol %, insbesondere mindestens 90 mol %, Oxymethyleneinheiten (-CH₂-O-) enthalten. Gewünschtenfalls können geringe Mengen von Verzweigern eingesetzt werden. Üblicherweise beträgt die Menge an Verzweigern nicht mehr als 1 Gew. %, bezogen auf die zur Herstellung der Polyoxymethylen-Homo- oder -Copolymeren verwendeten Gesamtmonomermenge, vorzugsweise nicht mehr als 0,3 Gew. %.

Die Molekulargewichte dieser Polymeren können innerhalb weiter Bereiche schwanken. Typischerweise weisen diese Polymeren wiederkehrende Struktureinheiten der Formel -(CH₂-O-)ₓ auf, wobei sich x im Bereich von 100 bis 10.000, vorzugsweise von 300 bis 3.000, bewegt.

Der Begriff Polyoxymethylen-Reste umfasst dabei sowohl Reste, die von Homopolymeren des Formaldehyds oder seiner cyclischen Oligomeren, wie des Trioxans oder Tetroxans, abgeleitet sind, als auch Reste, die von copolymeren Komponenten abgeleitet sind.

Polyoxymethylen-Copolymere leiten sich von Formaldehyd oder seinen cyclischen Oligomeren, insbesondere von Trioxan, und von cyclischen Ethern, Aldehyden, wie Glyoxylsäureester, cyclischen Acetalen, die gegebenenfalls substituiert sein können, und/oder linearen Oligo- oder Polyacetalen ab. Bevorzugte cyclische Ether oder Acetale sind solche der Formel 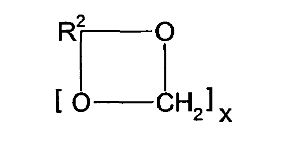 worin x 0 oder 1 ist und R² eine C₂-C₄Alkylengruppe bedeutet, die gegebenenfalls mit ein oder mehreren C₁-C₄-Alkylgruppen, C₁-C₄-Alkoxygruppen und/oder Halogenatomen, vorzugsweise Chloratomen, substituiert ist.

Nur beispielsweise seien Ethylenoxid, 1,2-Propylenoxid, 1,2-Butylenoxid, 1,3-Butylenoxid, 1,3-Dioxan, 1,3-Dioxolan, 1,3-Dioxepan und 1,3,6-Trioxocan als cyclische Ether, sowie lineare Oligo- oder Polyformale, wie Polydioxolan oder Polydioxepan, als Comonomere genannt.

Daneben kann es sich auch um Block-Copolymere handeln, die neben Polyoxymethylen-Blöcken auch von hydroxyl-terminierten Polymeren abgeleitete Struktureinheiten aufweisen. Bevorzugte Block-Copolymere leiten sich von Polyoxymethylen-Homopolymer- oder -Copolymerblöcken und von Polyalkylenglykol- oder hydroxyl-terminierten Polybutadienblöcken ab.

Derartige Copolymere sind beispielsweise in der EP-A-1,418,190 beschrieben.

Bevorzugt werden Polyoxymethylen-Copolymere hergestellt, in welchen

Polyoxymethylen-Reste mit 99,9 - 90 Mol-% wiederkehrende Struktureinheiten der Formel -(CH₂-O-)ₓ, vorzugsweise abgeleitet von Trioxan, und 0,1 bis 10 mol-% wiederkehrende Struktureinheiten abgeleitet von einem der vorgenannten Comonomeren vorkommen.

Besonders bevorzugt werden Polyoxymethylen-Copolymere hergestellt, in welchen Polyoxymethylen-Blöcke mit 99,9 - 90 Mol-% wiederkehrende Struktureinheiten der Formel -(CH₂-O-)ₓ, vorzugsweise abgeleitet von Trioxan, und 0,1 bis 10 mol-% wiederkehrende Struktureinheiten der Formel

-(CH₂-CH₂-O-)_{z}

auftreten, worin z eine ganze Zahl von mindestens 1 ist.

Als Polyoxymethylen-Copolymere ebenfalls herstellbar sind Polymere mit wiederkehrende Struktureinheiten, die beispielsweise durch Umsetzung von Trioxan, einem der vorstehend beschriebenen cyclischen Ether oder Acetal und mit einem dritten Monomeren, vorzugsweise einem bifunktionellen Dioxolan, einem bifunktionellen Dioxan oder einem bifunktionellen Epoxid. Beispiele für ein bifunktionelles Epoxid sind Verbindungen der Formel 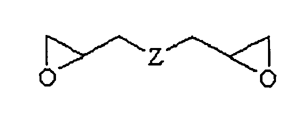 wobei Z eine chemische Bindung, -O- oder -O-R¹-O-(R¹ = C₂- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd im Molverhältnis 2 : 1, sowie Diether aus 2 Mol Glycidylverbindung und 1 Mol eines aliphatischen Diols mit 2 bis 8 C-Atomen, wie beispielsweise die Diglycidylether von Ethylenglykol, 1,4-Butandiol, 1,3-Butandiol, Cyclo-butan-1,3-diol, 1,2-Propandiol, Cyclohexan-1,4-diol, sowie Diglycerindiformal um nur einige Beispiele zu nennen.

Verfahren zur Herstellung der vorstehend beschriebenen POM-Homo- und Copolymerisate sind dem Fachmann bekannt und in der Literatur beschrieben.

Bei der Polymerisation in homogener Phase liegt die Polymerisationsmischung in flüssiger Form vor oder verbleibt in diesem Zustand im Verlaufe der Polymerisation.

Das Molekulargewicht der entstehenden (Co)polymeren kann gegebenenfalls durch Einsatz der bei der Herstellung von Polyoxymethylenen an sich bekannte Regler eingestellt werden.

Beispiele für Regler sind Acetale wie Methylal, Ethylal oder Butylal oder andere, zweiwertige Alkohole der Formel HO-R¹-OH, worin R¹ ein zweiwertiger aliphatischer Rest ist, sowie geringe Mengen an Wasser. Diese können als Kettenüberträger fungieren. Die Regler werden üblicherweise in Mengen von bis zu 50.000 ppm, vorzugsweise von 100 bis 3.000 ppm, eingesetzt.

Als Initiatoren kommen die üblicherweise bei der Herstellung von Oxymethylen-Homopolymeren oder -Copolymeren eingesetzten kationischen Starter in Frage. Beispiele dafür sind Protonensäuren, wie fluorierte oder chlorierte Alkyl- und Arylsulfonsäuren, z.B. Trifluormethansulfonsäure, Trifluormethansulfonsäureanhydrid, oder Heteropolysäuren, wie Hexawolframatophosphorsäure oder Hexamolybdatophosphorsäure, oder Lewis-Säuren, wie z.B. Zinntetrachlorid, Arsenpentafluorid, Phosphorpentafluorid und Bortrifluorid, sowie deren Komplexverbindungen und salzartige Verbindungen, wie z.B. Bortrifluorid-Etherate und Triphenylmethylenhexafluorophosphat.

Die Initiatoren werden üblicherweise in Mengen von 0,01 bis 1.000 ppm, vorzugsweise von 0,03 bis 100 ppm, bezogen auf das Monomer(gemisch) eingesetzt.

Erfindungsgemäß sind Druck und Temperatur in der Polymerisationszone so zu wählen, daß Monomere und Polymerisat in homogener Verteilung vorliegen, vorzugsweise vollständig ineinander gelöst sind. Dieses kann durch geeignet auszuwählende Reaktionsdrucke und Reaktionstemperaturen sichergestellt werden.

Typische Polymerisationstemperaturen bewegen sich im Bereich von 130°C bis 170°C.

Typische Desaktivierungstemperaturen bewegen sich im Bereich von 150°C bis 250°C, vorzugsweise von 170°C bis 200°C.

Typische Polymerisations- und Deaktivierungsdrucke bewegen sich im Bereich von 10 bis 2000 bar, vorzugsweise von 15 bis 200 bar.

Polymerisation und Desaktivierung können in den für die Herstellung von POM-Homo- oder -Copolymeren bekannten Reaktoren erfolgen. Typischerweise setzt man Kneter, Extruder oder vorzugsweise mit statischen Mischern ausgelegte Rohrreaktoren ein, die temperierbar und druckfest ausgelegt sind.

Bevorzugt werden Schritte i) und ii) bei erhöhten Temperaturen und Drucken ausgeführt.

Besonders bevorzugt werden Schritte i) und ii) in einem Reaktor ausgeführt, insbesondere in einem mit statischen Mischern versehenen Rohrreaktor.

Die Polymerisationsdauer kann in weiten Bereichen schwanken und bewegt sich typischerweise im Bereich von 0,1 bis 20 Minuten. Vorzugsweise beträgt die Polymerisationsdauer 0,4 bis 5 Minuten.

Nach der Polymerisation wird die heiße Polymerschmelze in an sich bekannter Weise deaktiviert. Dieses erfolgt durch Zugabe von Desaktivatoren für den Initiator zur Polymerschmelze direkt im Anschluss an die Polymerisation. Dieser Schritt kann wie in EP-A-699,695 oder in EP-A-638,599 beschrieben durchgeführt werden. Als Desaktivatoren können die bekannten basischen Verbindungen, wie Natriumcarbonat, Dinatriumhydrogenphosphat oder tertiäre Amine, eingesetzt werden.

Polymerisation und Deaktivierung werden vorzugsweise in einem Reaktor, beispielsweise einem Rohrreaktor, durchgeführt, wobei ein fließender Übergang zwischen Polymerisations- und Deaktivationszone besteht, der lediglich durch die Zugabe des Deaktivators festgelegt ist. Beide Verfahrensschritte können aber auch in unterschiedlichen Aggregaten vorgenommen werden.

Parallel zur Deaktivierung der Initiatoren verläuft die Stabilisierung des erhaltenen rohen (Co)polymeren. Das kann bei den Homopolymeren durch Verkappung von Endgruppen, beispielsweise durch Veretherung oder Veresterung mit geeigneten Verschlußmitteln, wie mit Essigsäurederivaten, beispielsweise mit Essigsäureanhydrid, erfolgen und bei den Copolymeren durch gezielten Abbau der erzeugten Polymerketten bis zu einer stabilisierenden Monomereinheit. Diese Maßnahmen sind an sich bekannt.

Nach der Deaktivierung und Stabilisierung der Polymerschmelze wird diese zur Entfernung der Restmonomeren in eine Entspannungszone übergeführt und durch Anlegen eines verminderten Druckes werden die Restmonomeren entfernt.

Die Entspannungszone wird von einem Raum gebildet, der von der heißen Polymerschmelze ausgefüllt wird. Durch Anlegen eines Unterdruckes, vorzugsweise eines Druckes von weniger als 500 mbar, insbesondere von weniger als 200 mbar, wird der größte Teil der verbliebenen Restmonomeren unter Ausnutzung der Temperatur der Polymerschmelze aus dieser abgetrieben. Dieser Verfahrensschritt kann in einem abgetrennten Teil des Rohrreaktors durchgeführt werden, vorzugsweise in einem Extruder. Es können aber auch andere Aggregate, wie z.B. eine Flashkammer, verwendet werden.

Vorzugsweise wird dazu die Polymerschmelze nach Schritt ii) unter Aufrechterhaltung des Druckes in einen Extruder übergeführt, in dem die Entspannung und das Absaugen der Restmonomeren erfolgt.

Besonders bevorzugt wird ein Zweischneckenextruder verwendet.

In der Entspannungszone können gegebenenfalls bereits Stabilisatoren und Verarbeitungshilfsmittel (nachstehend auch "Zusätze" genannt) in das Polymerisat eingearbeitet werden. Diese Zusätze sind so auszuwählen, daß sie durch die nachfolgende Extraktionsstufe nicht wieder aus dem Polymerisat entfernt werden.

In einer bevorzugten Variante des erfindungsgemäßen Verfahrens wird nach der Abtrennung der Restmonomeren in den Extruder eine Mischung von Zusätzen eindosiert und in das heiße Polyoxymethylen-Homo- oder -Copolymer eingearbeitet.

Bei dieser Ausführungsform des erfindungsgemäßen Verfahrens wird die Mischung von Zusätzen so ausgewählt, daß diese nur Komponenten enthält, die gegenüber der nachfolgenden Extraktionsstufe beständig sind, die vorzugsweise nicht heißwasserlöslich sind.

Unter "Heißwasserlöslichkeit" wird im Rahmen der vorliegenden Beschreibung eine so geringe Löslichkeit einer Verbindung in heißem Wasser verstanden, so dass diese unter den gewählten Extraktionsbedinungen zu mindestens 95 Gew. % in der Mischung verbleibt.

Als Komponenten der Mischung von Zusätzen lassen sich die üblicherweise zum Stabilisieren und/oder Modifizieren von Polyoxymethylenen verwendeten Verbindungen einsetzen.

Dabei handelt es sich beispielsweise um Antioxidantien, Säurefänger, Formaldehydfänger, UV-Stabilisatoren oder Wärme-Stabilisatoren. Daneben kann die Mischung von Zusätzen Verarbeitungshilfen enthalten, beispielsweise Haftvermittler, Gleitmittel, Nukleierungsmittel, Entformungsmittel, Füllstoffe, Verstärkungsmaterialien oder Antistatika sowie Zusätze, die der Formmasse eine gewünschte Eigenschaft verleihen, wie Farbstoffe und/oder Pigmente und/oder Schlagzähmodifiziermittel und/oder elektrische Leitfähigkeit vermittelnde Zusätze; sowie Mischungen dieser Zusätze, ohne jedoch den Umfang auf die genannten Beispiele zu beschränken.

Nach dem Abtreiben der Restmonomeren in der Entspannungszone und der möglichen Additivierung wird das Polymerisat granuliert und in einer Extraktionsstufe werden verbliebene Restmonomere und/oder Oligomere und/oder andere Verunreinigungen aus dem Polymerisat entfernt.

Granulieren und Extraktion kann in an sich bekannten Aggregaten erfolgen.

Beispiele für Granulierer sind Strang-, Wasserring- und Unterwasser-granulierer.

Ein Beispiel für eine Extraktionsapparatur ist ein Gegenstromwäscher.

An die Extraktionsstufe schließt sich vorzugsweise eine Trocknung an, um das Granulat von Resten des anhaftenden Extraktionsmittels zu befreien.

Danach kann das Polymere gegebenenfalls in an sich bekannter Weise mit Zusätzen versehen werden. In dieser Verfahrensstufe können auch solche Zusätze zugefügt werden, die in der Extraktionsstufe wieder aus dem Polymerisat herausgelöst worden wären.

Die Extraktion kann mit beliebigen Extraktionsmitteln für die Entfernung von Oligomeren und/oder Restmonomeren durchgeführt werden. Bevorzugt wird eine Heißwasserbehandlung.

Die Heißwasserbehandlung erfolgt bevorzugt als Gegenstromwäsche, insbesondere unter Druck und bei Temperaturen oberhalb von 100°C.

Typische Behandlungstemperaturen bewegen sich im Bereich von 100 bis 170°C, vorzugsweise 110 bis 150°C und besonders bevorzugt 120 bis 135°C.

Die Behandlungsdrucke bewegen sich typischerweise 1 bis 5 bar oberhalb des Dampfdruckes des Extraktionsmediums bei der gewählten Extraktions-temperatur.

In einer weiteren bevorzugten Variante des erfindungsgemäßen Verfahrens wird die Schmelze des Polyoxymethylen-Homo- oder Copolymeren nach dem Verlassen der Entspannungszone verfestigt und granuliert, ohne daß dem Polymerisat in der Entspannungszone eine Mischung von Zusätzen zugesetzt worden ist, und anschließend einer Heißwasserextraktion unterworfen.

Bei dieser Ausführungsform wird das Granulat nach der Heißwasserbe-handlung mit einer Mischung von Zusätzen für das Polyoxymethylen-Homo- oder Copolymer compoundiert, vorzugsweise durch Aufschmelzen des Granulats in einem Extruder und durch Einmischen der Mischung von Zusätzen in dem Extruder. Danach wird das Extrudat nochmals granuliert.

In dieser Ausführungsform des erfindungsgemäßen Verfahrens ist es möglich, Mischungen von Zusätzen mit heißwasserlöslichen Komponenten einzusetzen.

Die erfindungsgemäß hergestellten Polyoxymethylen-Homo- und -Copolymeren können in an sich bekannter Weise durch Formverfahren, beispielsweise durch Blasformen, Spritzguss oder Extrusion, zu Formkörpern weiterverarbeitet werden.

Die Erfindung betrifft auch eine Vorrichtung zur Durchführung des oben beschriebenen Verfahrens. Diese umfaßt die nachstehend aufgezählten Elemente in der angegebenen Reihenfolge:
A) Reaktor (1) umfassend eine Polymerisationszone (2) und eine direkt daran sich anschließende Deaktivierungszone (3) zur Polymerisation und Deaktivierung von Polyoxymethylen-Homo- und Copolymeren in homogener Phase in an sich bekannter Weise,
B) Entspannungsaggregat (4), das gegebenenfalls eine Dosiervorrichtung (5) für Stabilisatoren für das Polymerisat aufweist,
C) Granuliervorrichtung (6),
D) Extraktionsvorrichtung (7),
E) gegebenenfalls eine Trocknungsvorrichtung (8), und
F) gegebenenfalls eine Vorrichtung (17) zum Einarbeiten von Stabilisatoren für das Polymerisat.

Vorzugsweise handelt es sich bei Reaktor (1) um einen Rohrreaktor, der mit statischen Mischern bestückt ist.

Vorzugsweise handelt es sich bei dem Entspannungsaggregat (4) um einen Extruder, vorzugsweise um einen Zweischneckenextruder.

Vorzugsweise handelt es sich bei der Extraktionsvorrichtung (7) um einen Gegenstromwäscher.

Vorzugsweise handelt es sich bei der Vorrichtung (17) um einen Extruder, ganz besonders bevorzugt um einen Zweischneckenextruder.

In den nachfolgenden Abbildungen werden zwei Ausführungsformen der erfindungsgemäßen Vorrichtung und des erfindungsgemäßen Verfahrens beispielhaft beschrieben.

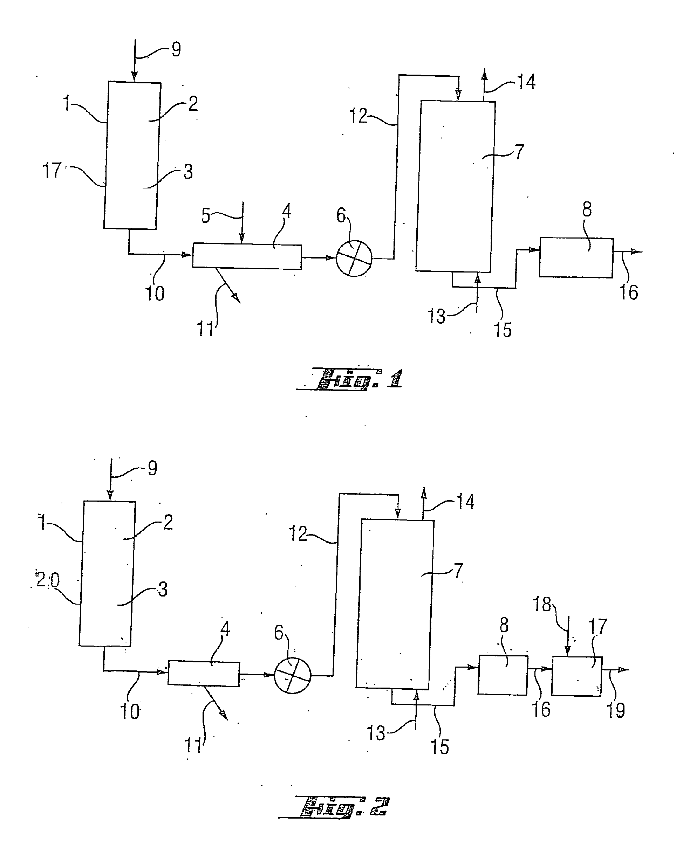

Fig. 1 zeigt schematisch eine erfindungsgemäße Vorrichtung bestehend aus Reaktor (1), Entspannungsaggregat gebildet aus einem Extruder (4), der eine Dosiervorrichtung (5) für Zusätze für das Polymerisat aufweist, aus einer Granuliervorrichtung (6), einer Extraktionsvorrichtung (7) und einer Trocknungsvorrichtung (8).

Reaktor (1) besteht aus Polymerisationszone (2) und einer direkt anschließenden Deaktivierungszone (3), die an der Dosierstelle des Desaktivators über Leitung (17) beginnt. Durch Leitung (9) werden die Reaktanten dem Reaktor (1) zugeführt. Die Reaktor (1) über Leitung (10) verlassende Polymerschmelze wird im Extruder (4) durch Absaugen der Restomonomeren über Leitung (11) von diesen befreit und über Dosiervorrichtung (5) werden dem Polymerisat gegen Heißwasserextraktion beständige Zusätze zugeführt und im Extruder (4) in das Polymerisat eingearbeitet.

Das Extrudat wird sodann in der Granuliervorrichtung (6) granuliert, über Leitung (12) einer Extraktionsvorrichtung (7) zugeführt und dort im Gegenstrom einer Heißwasserbehandlung (13, 14) unterzogen. Über Leitung (15) verläßt das extraktionsbehandelte Granulat die Extraktions-vorrichtung (7), wird in einer Trocknungsvorrichtung (8) getrocknet und verläßt diese über Leitung (16).

Fig. 2 zeigt schematisch eine weitere erfindungsgemäße Vorrichtung bestehend aus Reaktor (1), Entspannungsaggregat gebildet aus einem Extruder (4), einer Granuliervorrichtung (6), einer Extraktionsvorrichtung (7) einer Trocknungsvorrichtung (8) und einem weiteren Extruder (17).

Reaktor (1) besteht aus Polymerisationszone (2) und einer direkt anschließenden Deaktivierungszone (3), die an der Dosierstelle des Desaktivators über Leitung (20) beginnt. Durch Leitung (9) werden die Reaktanten dem Reaktor (1) zugeführt. Die Reaktor (1) über Leitung (10) verlassende Polymerschmelze wird im Extruder (4) durch Absaugen der Restomonomeren über Leitung (11) von diesen befreit. Das Extrudat wird sodann in der Granuliervorrichtung (6) granuliert, über Leitung (12) einer Extraktionsvorrichtung (7) zugeführt und dort im Gegenstrom einer Heißwasserbehandlung (13, 14) unterzogen. Über Leitung (15) verläßt das extraktionsbehandelte Granulat die Extraktionsvorrichtung (7), wird in einer Trocknungsvorrichtung (8) getrocknet und wird über Leitung (16) einem Extruder (17) zugeführt. Über Dosiervorrichtung (18) werden dem Polymerisat Zusätze zugeführt und im Extruder (17) in das Polymerisat eingearbeitet. Das additivierte Polymerisat verläßt Extruder (17) über Leitung (19).

## Patentansprüche

1. Verfahren zur Herstellung von Polyoxymethylen-Homo- und Copolymeren umfassend die Maßnahmen:
i) Polymerisation mindestens eines -CH₂-O- Einheiten bildenden Monomers gegebenenfalls mit ein oder mehreren Comonomer(en) und mindestens eines Initiators in homogener Phase in einer Polymerisationszone in an sich bekannter Weise,
ii) Abbau der instabilen Kettenenden und/oder Verschluß der Endgruppen des in Schritt i) hergestellten Polymerisats bei Temperaturen oberhalb von dessen Schmelztemperatur und Desaktivierung des Initiators durch Zugabe von Deaktivatoren in einer sich an die Polymerisationszone anschließenden Deaktivierungszone in an sich bekannter Weise,
iii) Überführung der Polymerschmelze in eine Entspannungszone,
iv) Entfernen der Restmonomeren aus der Polymerschmelze durch Anlegen eines verminderten Druckes an die Entspannungszone,
v) Granulieren des Polymerisats,
vi) Extrahieren von verbliebenen Restmonomeren und/oder von Oligomeren und anderen Verunreinigungen aus dem Polymerisat, und
vii) gegebenenfalls Trocknen des Polymerisats.

2. Verfahren nach Anspruch 1, **dadurch gekennzeichnet, dass** Schritte i) und ii) in einem mit statischen Mischern bestückten Rohrreaktor durchgeführt werden.

3. Verfahren nach Anspruch 1, **dadurch gekennzeichnet, dass** die Ent-spannung in einem Extruder durchgeführt wird.

4. Verfahren nach Anspruch 3, **dadurch gekennzeichnet, dass** als Extruder ein Zweischneckenextruder verwendet wird.

5. Verfahren nach Anspruch 4, **dadurch gekennzeichnet, dass** nach der Abtrennung der Restmonomeren in den Extruder eine Mischung von Zusätzen eindosiert wird und im Extruder in das heiße Polymerisat eingearbeitet wird, wobei die Mischung von Zusätzen so gewählt wird, daß diese in Schritt vii) nicht extrahierbar ist.

6. Verfahren nach Anspruch 5 **dadurch gekennzeichnet, dass** die Mischung von Zusätzen nur Komponenten enthält, die nicht heißwasserlöslich sind.

7. Verfahren nach Anspruch 1, **dadurch gekennzeichnet, dass** das_Extrahieren eine Heißwasserbehandlung zur Entfernung von wasserlöslichen Oligomeren und/oder Restmonomeren ist.

8. Verfahren nach Anspruch 7, **dadurch gekennzeichnet, dass** die Heißwasserbehandlung als Gegenstromwäsche unter Druck und bei Temperaturen oberhalb von 100°C erfolgt.

9. Verfahren nach Anspruch 1, **dadurch gekennzeichnet, dass** das Granulat nach der Extraktion und Trocknung mit einer Mischung von Zusätzen für das Polyoxymethylen-Homo- oder -Copolymer compoundiert wird, vorzugsweise durch Aufschmelzen des Granulats in einem Extruder und durch Einmischen der Mischung von Zusätzen in den Extruder, und daß das Extrudat anschließend granuliert wird.

10. Verfahren nach Anspruch 9, **dadurch gekennzeichnet, dass** die Mischung von Zusätzen heißwasserlösliche Komponenten enthält.

11. Vorrichtung zur Herstellung von Polyoxymethylen-Homo- und Copolymeren umfassend die Elemente in folgender Reihenfolge:
A) Reaktor (1) umfassend eine Polymerisationszone (2) und eine direkt daran sich anschließende Deaktivierungszone (3) zur Polymerisation und Deaktivierung von Polyoxymethylen-Homo- und Copolymeren in homogener Phase in an sich bekannter Weise,
B) Entspannungsaggregat (4), das gegebenenfalls eine Dosiervorrichtung (5) für Stabilisatoren für das Polymerisat aufweist,
C) Granuliervorrichtung (6),
D) Extraktionsvorrichtung (7),
E) gegebenenfalls eine Trocknungsvorrichtung (8), und
F) gegebenenfalls eine Vorrichtung (17) zum Einarbeiten von Stabilisatoren für das Polymerisat.

12. Vorrichtung nach Anspruch 11, **dadurch gekennzeichnet, dass** Reaktor (1) ein Rohrreaktor ist, der mit statischen Mischern bestückt ist.

13. Vorrichtung nach Anspruch 11, **dadurch gekennzeichnet, dass** das Entspannungsaggregat (4) ein Extruder, vorzugsweise ein Zweischneckenextruder ist.

14. Vorrichtung nach Anspruch 11, **dadurch gekennzeichnet, dass** die Extraktionsvorrichtung (7) ein Gegenstromwäscher ist.

15. Vorrichtung nach Anspruch 11, **dadurch gekennzeichnet, dass** die Vorrichtung zum Einarbeiten von Stabilisatoren für das Polymerisat (17) ein Extruder, vorzugsweise ein Zweischneckenextruder, ist.

## Claims

1. A process for preparing polyoxymethylene homo- and copolymers, encompassing the measures of:
i) polymerizing at least one monomer which forms -CH₂-O- units and, if appropriate, polymerizing one or more comonomers and at least one initiator in a homogeneous phase in a polymerization zone in a manner known per se,
ii) taking the polymer prepared in step i) and removing its unstable chain ends and/or capping its end groups, at temperatures above its melting point, and deactivating the initiator in a manner known per se via addition of deactivators in a deactivation zone immediately downstream of the polymerization zone,
iii) transferring the polymer melt into a depressurization zone,
iv) removing the residual monomers from the polymer melt via application of a reduced pressure to the depressurization zone,
v) pelletization of the polymer,
vi) extraction of remaining residual monomers and/or of oligomers and of other contaminants from the polymer, and
vii) if appropriate, drying the polymer.

2. The process as claimed in claim 1, wherein steps i) and ii) are carried out in a tubular reactor equipped with static mixers.

3. The process as claimed in claim 1, wherein the depressurization is carried out in an extruder.

4. The process as claimed in claim 3, wherein a twin-screw extruder is used as extruder.

5. The process as claimed in claim 4, wherein, after the removal of the residual monomers, a mixture of additives is fed into the extruder, and is incorporated into the hot polymer in the extruder, the selection of the mixture of additives being such that it is not extractable in step vii).

6. The process as claimed in claim 5, wherein the mixture of additives comprises only components which are not soluble in hot water.

7. The process as claimed in claim 1, wherein the extraction process is a hot water treatment for removal of water-soluble oligomers and/or residual monomers.

8. The process as claimed in claim 7, wherein the hot water treatment takes the form of a counter-current wash under pressure and at temperatures above 100°C.

9. The process as claimed in claim 1, wherein the pellets are compounded, after extraction and drying, with a mixture of additives for the polyoxymethylene homo- or copolymer, preferably via melting of the pellets in an extruder and via mixing to incorporate the mixture of additives into the extruder, and wherein the extrudate is then pelletized.

10. The process as claimed in claim 9, wherein the mixture of additives comprises components soluble in hot water.

11. An apparatus for preparing polyoxymethylene homo- and copolymers, encompassing the following elements in the following sequence:
A) reactor (1) encompassing a polymerization zone (2) and a deactivation zone (3) directly downstream thereof for polymerizing and deactivating polyoxymethylene homo- and copolymers in a homogeneous phase in a manner known per se,
B) depressurizing assembly (4), which, if appropriate, has a metering apparatus (5) for stabilizers for the polymer,
C) pelletizer (6),
D) extraction apparatus (7),
E) if appropriate, a drying apparatus (8), and
F) if appropriate, an apparatus (17) for incorporating stabilizers for the polymer.

12. The apparatus as claimed in claim 11, wherein reactor (1) is a tubular reactor equipped with static mixers.

13. The apparatus as claimed in claim 11, wherein the depressurizing assembly (4) is an extruder, preferably a twin-screw extruder.

14. The apparatus as claimed in claim 11, wherein the extraction apparatus (7) is a counter-current washer.

15. The apparatus as claimed in claim 11, wherein the apparatus for incorporating stabilizers for the polymer (17) is an extruder, preferably a twin-screw extruder.

## Revendications

1. Procédé pour la préparation d'homopolymères et de copolymères de polyoxyméthylène comprenant les mesures :
i) polymérisation d'au moins un monomère formant des unités -CH₂-O- le cas échéant avec un ou plusieurs comonomère(s) et au moins un initiateur en phase homogène dans une zone de polymérisation, de manière connue en soi,
ii) dégradation des extrémités de chaîne instables et/ou fermeture des groupes terminaux du polymère préparé dans l'étape i) à des températures supérieures à sa température de fusion et désactivation de l'initiateur par addition de désactivateurs dans une zone de désactivation consécutive à la zone de polymérisation, de manière connue en soi,
iii) transfert de la masse fondue du polymère dans une zone de détente,
iv) élimination des monomères résiduels de la masse fondue du polymère par application d'une pression réduite dans la zone de détente,
v) granulation du polymère,
vi) extraction de monomères résiduels et/ou
d'oligomères et d'autres impuretés du polymère, et vii) le cas échéant séchage du polymère.

2. Procédé selon la revendication 1, **caractérisé en ce que** les étapes i) et ii) sont réalisées dans un réacteur tubulaire équipé de mélangeurs statiques.

3. Procédé selon la revendication 1, **caractérisé en ce que** la détente est réalisée dans une extrudeuse.

4. Procédé selon la revendication 3, **caractérisé en ce qu'**on utilise, comme extrudeuse, une extrudeuse à deux vis sans fin.

5. Procédé selon la revendication 4, **caractérisé en ce qu'**après la séparation des monomères résiduels, on introduit en dosant dans l'extrudeuse un mélange d'additifs et on l'incorpore dans l'extrudeuse dans le polymère chaud, le mélange d'additifs étant choisi de manière telle qu'il ne puisse pas être extrait dans l'étape vii).

6. Procédé selon la revendication 5, **caractérisé en ce que** le mélange d'additifs ne contient que des composants qui ne sont pas solubles dans l'eau chaude.

7. Procédé selon la revendication 1, **caractérisé en ce que** l'extraction est un traitement à l'eau chaude pour l'élimination d'oligomères et/ou de monomères résiduels solubles dans l'eau.

8. Procédé selon la revendication 7, **caractérisé en ce que** le traitement à l'eau chaude est réalisé comme lavage à contre-courant sous pression et à des températures supérieures à 100°C.

9. Procédé selon la revendication 1, **caractérisé en ce que** le granulat, après l'extraction et le séchage, est compoundé avec un mélange d'additifs pour l'homopolymère ou le copolymère de polyoxyméthylène, de préférence par fusion du granulat dans une extrudeuse et par introduction en mélangeant du mélange d'additifs dans l'extrudeuse et **en ce que** le produit extrudé est ensuite granulé.

10. Procédé selon la revendication 9, **caractérisé en ce que** le mélange d'additifs contient des composants solubles dans l'eau chaude.

11. Dispositif pour la préparation d'homopolymères et de copolymères de polyoxyméthylène comprenant les éléments, dans l'ordre suivant :
A) réacteur (1) comprenant une zone de polymérisation (2) et une zone de désactivation (3) directement consécutive à celle-ci pour la polymérisation et la désactivation d'homopolymères et de copolymères de polyoxyméthylène en phase homogène, de manière connue en soi,
B) appareil de détente (4), qui présente le cas échéant un dispositif de dosage (5) pour des stabilisateurs pour le polymère,
C) dispositif de granulation (6),
D) dispositif d'extraction (7),
E) le cas échéant un dispositif de séchage (8), et
F) le cas échéant un dispositif (17) pour l'incorporation de stabilisateurs pour le polymère.

12. Dispositif selon la revendication 11, **caractérisé en ce que** le réacteur (1) est un réacteur tubulaire qui est équipé de mélangeurs statiques.

13. Dispositif selon la revendication 11, **caractérisé en ce que** l'appareil de détente (4) est une extrudeuse, de préférence une extrudeuse à deux vis sans fin.

14. Dispositif selon la revendication 11, **caractérisé en ce que** le dispositif d'extraction (7) est un laveur à contre-courant.

15. Dispositif selon la revendication 11, **caractérisé en ce que** le dispositif pour l'incorporation de stabilisateurs pour le polymère (17) est une extrudeuse, de préférence une extrudeuse à deux vis sans fin.
